# EUROPEAN PATENT APPLICATION

(11) **EP 1 182 124 A2**
(43) Date of publication of application: **27.02.2002**
(21) Application number: 00124375.7
(22) Date of filing: 20.11.2000
(51) Int. Cl.: B62M 1/04, B62K 3/00

(54) **Scooter**

(30) Priority: 25.08.2000 DE 10041761
(71) Applicant: Vigorousport Int. Co. Ltd., Taichung (TW)
(72) Inventor: Ming- Yu, Lin , Vigorousport Int.,Co.,Ltd, Taichung (TW); Hung- Che, Chueh , Vigorousport Int.,Co.,Ltd, Taichung (TW)
(74) Representative: Klingseisen, Franz, Dipl.-Ing.

(57) **Abstract**

A scooter is disclosed. The scooter includes a chassis (11), a front wheel steerably attached to a front end of the chassis (11), a rear wheel (12) rotatably attached to a rear end of the chassis (11) and an elongated pedal (20) disposed longitudinally above the chassis (11). The pedal (20) has a backward end (21) and a forward end (22). The pedal (20) is pivotally connected to the chassis (11) between the ends (21,22) thereof and is adapted to sway relative to the chassis (11). A first shaft (31,50) laterally extends through and is rotatably supported on the chassis (11). The scooter further includes a driving pulley (32) securely mounted around the first shaft (31,50), a driven pulley (13) securely attached to a center of the rear wheel (12), and a primary flexible drive piece (33) around the driving pulley (32) and the driven pulley (13) to transmit rotation from the first shaft (31,50) to the rear wheel (12) such that the scooter may move forward when the first shaft (31,50) is rotated relative to the chassis (11) in a correct direction. Additionally, means are provided for transmitting motion from the pedal (20) to the first shaft (31,50) in a manner of causing rotation of the first shaft (31,50) invariably in the correct direction.

## Description

### BACKGROUND OF THE INVENTION

### 1. Field of the Invention

The present invention relates to a scooter and, more particularly, to a scooter which can be propelled forward continuously.

### 2. Description of Related Art

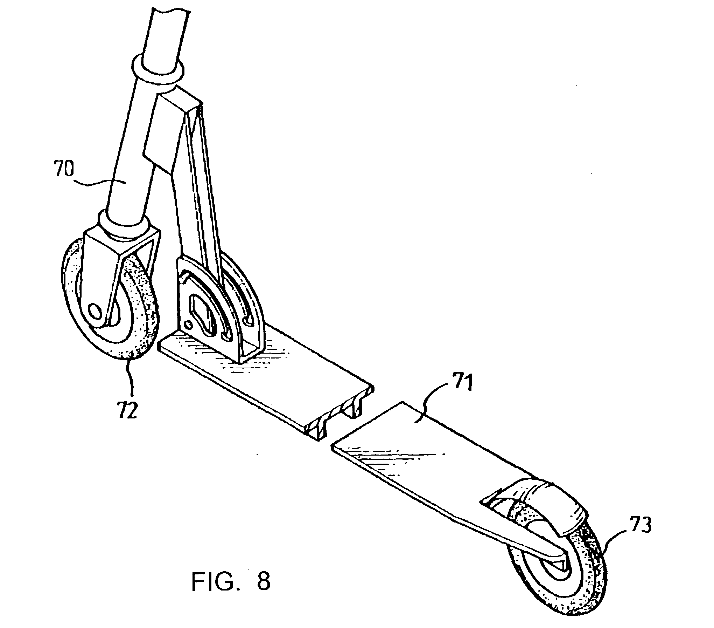

A scooter is a vehicle for a child to stand on by one foot and to propel it by the other foot touching the ground. As shown in Fig. 8, such a scooter typically includes a head tube (70) formed at a front end of a narrow board (71), with a front wheel (72) steerably attached to the head tube (70) and a rear wheel (73) rotatably attached to a rear end of the board (70).

Although this conventional scooter is popular with children, it still has the following disadvantages:

### 1. intermittent propelling:

Because it is pushed forward only at each time the other foot touches the ground, the conventional scooter is propelled intermittently and is moved forward at a relative slow speed.

### 2. proving an unacceptable sport at leisure:

Because one foot must be on the board (71) to support the body of the player, this foot can not be move about or lifted while the scooter moves along.

### 3. less sufficient safety

Because the player must lower the other foot to touch the ground and lift it away from the ground time after time, it is uneasy for the player to balance himself/herself on the scooter, especially for a young child.

Therefore, it is an objective of the invention to provide an improved scooter to mitigate and/or obviate the aforementioned problems.

### SUMMARY OF THE INVENTION

The object of the present invention is to provide a scooter which can be propelled forward continuously.

Another object of the present invention is to provide a scooter which can provide an exiting sport for leisure enjoyment.

Still another object of the present invention is to provide a scooter which has high safety.

Other objects, advantages and novel features of the invention will become more apparent from the following detailed description when taken in conjunction with the accompanying drawings.

### BRIEF DESCRIPTION OF THE DRAWINGS

Fig. 1 is a fragmentary cross-sectional view of a preferred embodiment of a scooter in accordance with the present invention;
Fig. 2 is a fragmentary perspective view of the preferred embodiment of the shooter shown in Fig. 1;
Fig. 3 is a fragmentary bottom view of the preferred embodiment of the scooter shown in Fig. 1;
Fig. 4 is a perspective view of motion-transmitting means involved in the preferred embodiment of the scooter of Fig. 1;
Fig. 5 is an exploded perspective view of the motion-transmitting means shown in Fig. 4;
Fig. 6 is a fragmentary cross-sectional view of another preferred embodiment of the scooter in accordance with the present invention;
Fig. 7 is a perspective view of motion-transmitting means involved in the preferred embodiment of the scooter of Fig. 6; and
Fig. 8 is a fragmentary perspective view of a conventional scooter.

### DETAILED DESCRIPTION OF THE PREFERRED EMBODIMENT

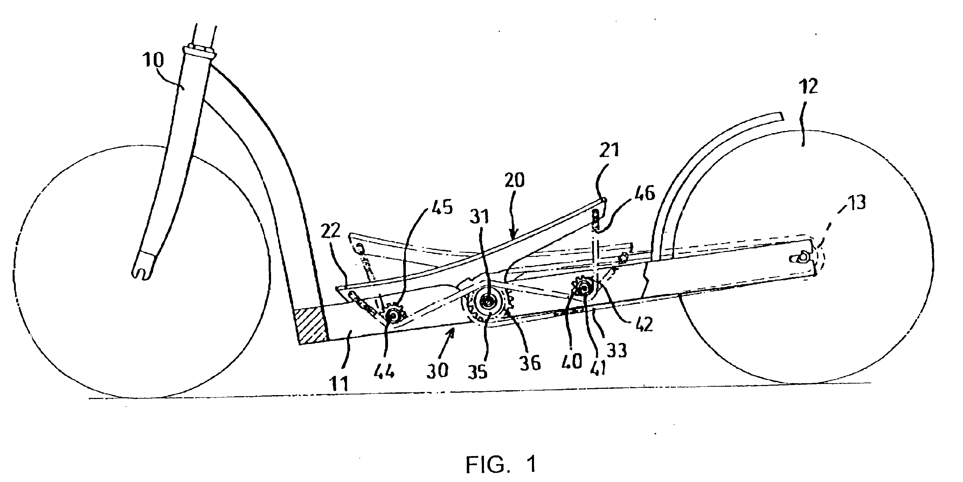

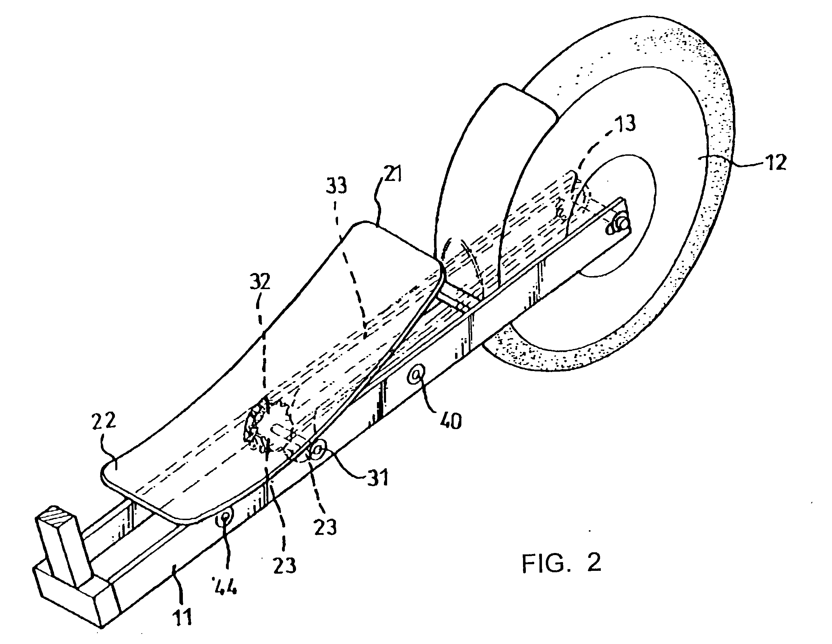

Referring to Figs. 1 and 2, a scooter in accordance with the present invention includes a chassis (11) having a front end and a rear end. The chassis (11) preferably has a head tube (10) formed at the front end thereof. A front wheel (not numbered) is steerably attached to the front end of the chassis (11) or to the head tube (10), such as by way of a front fork, and a rear wheel (12) is rotatably attached to the rear end of the chassis (11).

The scooter further includes an elongated pedal (20) disposed longitudinally above the chassis (11), The pedal (20) has a backward end (21) and a forward end (22), with a pair of downwardly extending wings (23) formed between the ends (21, 22) thereof. The pedal (20) is pivotally connected to the chassis (11), by means of a first shaft (31) which laterally extends through the chassis (11) and the wings (23), so that the pedal (20) may sway forward and backward relative to the chassis (11), as shown in Fig. 1.

The first shaft (31) is rotatably supported on the chassis (11). Being similar to a bicycle, there are provided a driving sprocket (32) securely mounted around the first shaft (31) and a driven sprocket (13) securely attached to a center of the rear wheel (12), with a primary chain (33) around the sprockets (32, 13) to transmit rotation from the first shaft (31) to the rear wheel (12). In this manner, the scooter is moved forward when the first shaft (31) is rotated relative to the chassis (11) in a correct direction, which is counterclockwise as view from Fig. 1.

According to the specification of the present invention, the terms 'correct direction' is referred to a direction in which the first shaft (31, 50) is rotated to drive the driven sprocket (13) in such a way that the vehicle is moved forward, as mentioned above, and the terms 'normal direction' is referred to the same direction of other parts of the scooter.

Additionally, there are provided means (30) for transmitting motion from the pedal (20) to the first shaft (31, 50) in a manner of causing rotation of the first shaft (31, 50) invariably in the correct direction.

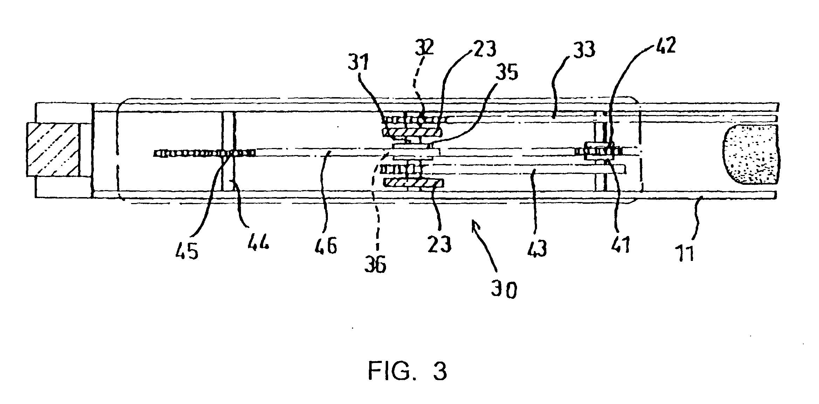

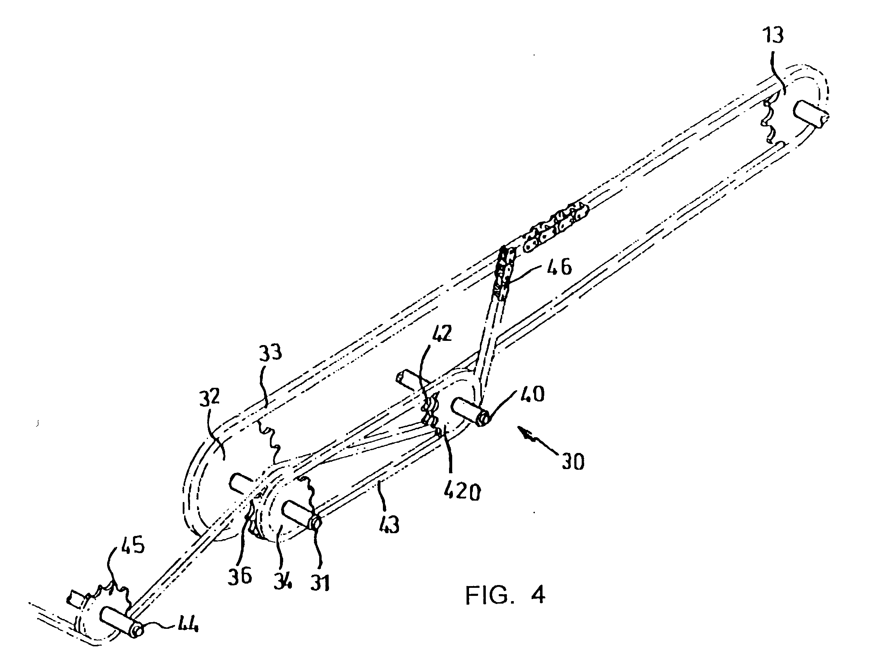

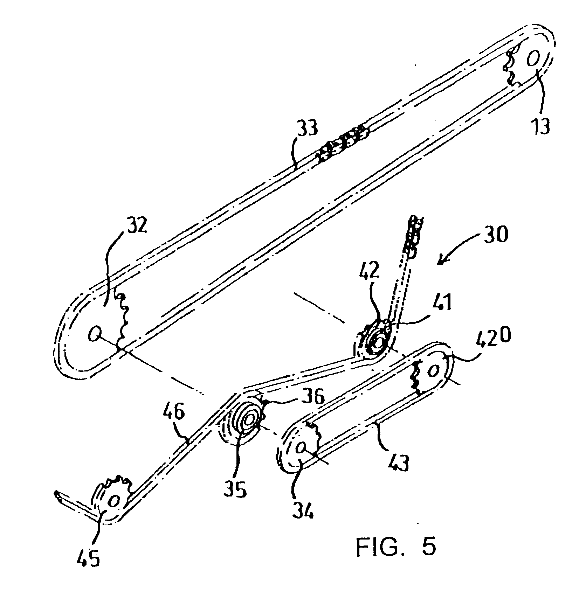

Referring to Figs. 3, 4 and 5, a preferred embodiment of the means (30) include a first sprocket (36), a second sprocket (45) and a third sprocket (42) mounted around respective first, second and third shafts (31, 44, 40), among which the second and third shafts (44, 40) also laterally extend through and rotatably supported on the chassis (11), except that the second one is in front of and the third one is behind the first shaft (31).

Each of the first and third sprockets (36, 42) is formed with a one-way mechanism (35, 41), such as a racket gearing, unidirectional bearing and the like, that couples the sprocket (36, 42) to the associated shaft (31, 40) when the sprocket (36, 42) is rotated in the normal direction and uncouples the sprocket (36, 42) from the associated shaft (31, 40) when the sprocket (36, 42) is rotated in the opposite direction.

In addition, there is a first secondary chain (46) running around a top edge of the first sprocket (36) and bottom edges of the second and third sprockets (45, 42), with two ends of the chain (46) attached to the ends (21, 22) of the pedal (20), as shown in Fig. 1,

The arrangement of the first secondary chain (46) enables the sprockets (36, 45, 42) to be rotated with the swaying motion of the pedal (20), especially the first and third sprockets (36, 42) to be rotated in opposite directions --- alternatively for each of them (36, 42) and relatively one with respect to another. The sprockets (36, 42) are thus complementarily coupled to their associated shafts (31, 40) due to their one-way mechanisms (33, 41), resulting in rotation of alternative one of the first and third shafts (31, 40) in the correct or the normal direction.

For the purpose of rotating the first shaft (31) during the period when the first sprocket (36) is uncoupled from the shaft (31), the embodiment of the means (30) further include a fourth sprocket (34) securely mounted around the first shaft (31) at a side of the first sprocket (36), a fifth sprocket (420) securely mounted around the third shaft (40) at a side of the third sprocket (42) and a second secondary chain (43) around the fourth and fifth sprockets (34, 420), thereby additionally transmitting the correct rotation from the third shaft (40) to the first shaft (31).

As shown in Figs 1, 2 and 5, the inventive scooter can be moved forward by a player (not shown) who stands on the pedal (20) with his/her feet on the ends (21, 22) to sway the pedal (20) like a seesaw.

As the rear end (21) of the pedal (20) is being pressed down, the front end (22) goes up, and the first secondary chain (46) is pulled in such a direction that the first sprocket (36) is rotated in the normal direction and the third sprocket (42) in the opposite direction, i. e. counterclockwise for the first sprocket (36) and clockwise for the third sprocket (42) as view from Fig. 1.

It is in these directions that the first sprocket (36) is coupled to the first shaft (31) and the third sprocket (42) is uncoupled from the third shaft (40), as mentioned above. The first shaft (31) is thus rotated in the correct direction with the first sprocket (36), and so the scooter is moved forward.

Similarly, as the front end (22) of the pedal (20) is being pressed down, the rear end (21) goes up, and the first secondary chain (46) is pulled so that the third sprocket (42) is rotated in the normal direction but the first sprocket (36) in the opposite direction, i. e. counterclockwise for the third sprocket (42) and clockwise for the first sprocket (36) as view from Fig. 1.

Now the first sprocket (36) is uncoupled from the first shafl (31) and the third sprocket (42) is coupled to the third shaft (40), which is hence rotated with the third sprocket (42). The first shift (31) is then rotated in the correct direction by the very third shaft, through the second secondary chain (43) around the fourth and fifth sprockets, and so the scooter is moved formed.

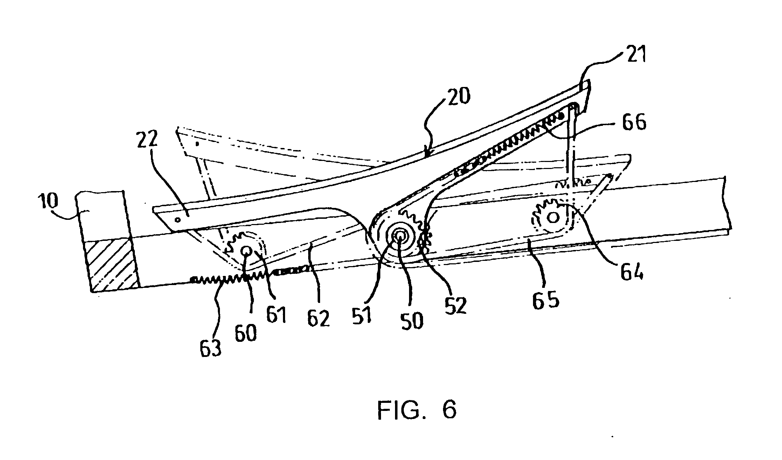

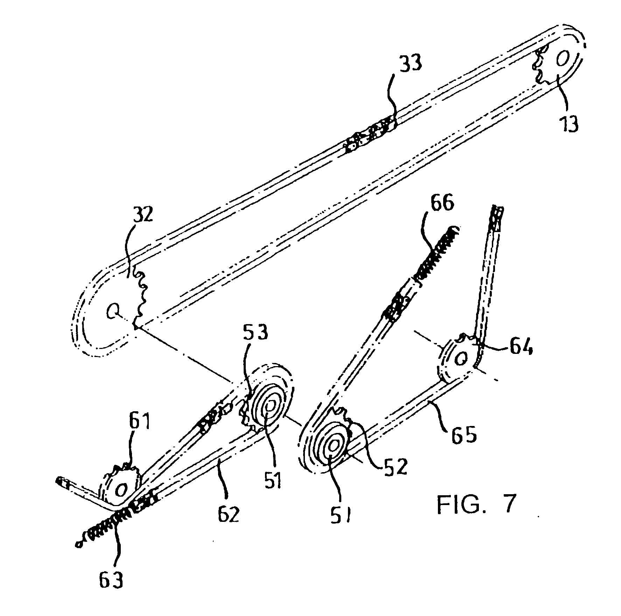

Referring to Figs 6 and 7, an alternative embodiment of the means (30) include a pair of sprockets (53, 52) mounted around the first shaft (50) side by side, with each sprocket (52, 53) having a one-way mechanisms (51) that couples the sprocket (52, 53) to the first shaft (50) when the sprocket (52, 53) is rotated in the normal direction and uncouples the sprocket (52, 53) from the first shaft (50) when the sprocket (52, 53) is rotated in the opposite direction.

In front of the first sprocket (53), there are a third sprocket (61) rotatably connected to the chassis (11), such as by a second shaft (60), and a first secondary chain (62) crossly running around a bottom edge of the third sprockets (61) and a rear edge of the first sprocket (53). The first secondary chain (46) has a first attached to the forward end (22) of the pedal (20), and a second end attached to a spring member (63) that is in turn connected to the chassis (11) substantially under the forward end (22) of the pedal (20), as shown in Fig. 6.

Behind the second sprocket (52), there are a fourth sprocket (64) rotatably connected to the chassis (11), such as by a third shaft (40), and a second secondary chain (65) running around a bottom edge of the fourth sprockets (64) and a front edge of the second sprocket (52). The second secondary chain (65) has a first end attached to the backward end (21) of the pedal (20), and a second end attached to a second spring member (66) that is in turn connected to the backward end (21) of the pedal (20).

This arrangement of the secondary chains (62, 65) also enables the sprockets (52, 53, 61, 64) to be rotated with the swaying motion of the pedal (20), especially the first and second sprockets (53, 52) to be rotated in opposite directions, and so the sprockets (53, 52) are complementarily coupled to the first shaft (50) due to the one-way mechanisms (51), resulting in rotation of the first shaft (50) invariably (31, 40) in the correct direction.

In detail, when the rear end (21) of the pedal (20) is pressed down, the front end (22) goes up, as shown in dash line in Fig. 6. The first secondary chain (62) is pulled, by stretching the spring member (63), in such a direction that the first sprocket (53) is rotated in the normal direction. The first sprocket (53) is then coupled to the first shaft (50) due to its one-way mechanism (51). Thus, the first shaft (50) is rotated in the correct direction with the first sprocket (53), thereby propelling the scooter forward.

When the front end (22) of the pedal (20) is pressed down, the rear end (21) goes up, as shown in solid line in Fig. 6. The first second secondary chain (65) is now pulled back by the stretched spring member (63), and so the first sprocket (53) is rotated in the opposite direction, being uncoupled from the first shaft (50). At the same time, The second secondary chain (65) is pulled, by stretching the spring member (66), in such a direction that the second sprocket (52) is rotated in the normal direction and is coupled to the first shaft (50) due to the one-way mechanism (51) of its own. As a result, the first shaft (50) is now rotated in the correct direction with the second sprocket (52), thereby propelling the scooter forward again.

From the foregoing, it is apparent that the inventive scooter can be moved forward by the player standing thereon with his/her feet pressing the ends (21, 22) of the pedal (20) alternatively and repeatedly.

It is also apparent to those skilled in the art that the chain (33, 43, 46, 62, 65) may be embodied as any flexible drive piece, such as a belt, and that the sprocket (13, 32, 36, 45, 42, 34, 420, 53, 52, 61, 64) may be embodied as any pulley or drive pulley, such as a belt pulley, that is configured to mate with the flexible drive piece.

From the above description, it is noted that the invention has the following advantages:

### 1. continuous propelling:

Because of the swaying pedal (20), the scooter can be propelled continuously and can be moved forward at a relative high speed.

### 2. providing an exiting sport at leisure en:

Because of the swaying pedal (20), the two feet must move up and down, which provides an exiting leisure sport for the player.

### 3. safety

Because the two feet of the player is always on the pedal (20), the scooter is stable in movement and has high safety.

It is to be understood, however, that oven though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A scooter comprising:
a chassis (11) having a front end and a rear end;
a front wheel steerably attached to said front end of said chassis (11);
a rear wheel (12) rotatably attached to said rear end of said chassis (11);
an elongated pedal (20) disposed longitudinally above said chassis (11), said pedal (20) having a backward end (21) and a forward end (22), said pedal (20) being pivotally connected to said chassis (11) between said ends (21, 22) thereof and being adapted to sway relative to said chassis (11);
a first shall (31, 50) laterally extending through and rotatably supported on said chassis (11);
a driving pulley (32) securely mounted around said first shaft (31, 50);
a driven pulley (13) securely attached to a center of said rear wheel (12);
a primary flexible drive piece (33) around said driving pulley (32) and said driven pulley (13) to transmit rotation from said first shaft (31, 50) to said rear wheel (12) such that said scooter may move forward when said first shaft (31, 50) is rotated relative to said chassis (11). in a direction; and
means (30) for transmitting motion from said pedal (20) to said first shaft (31, 50) in a manner of causing rotation of said first shaft (31, 50) invariably in said direction.

2. The scooter as claimed in claim 1, wherein said means (30) for transmitting comprise:
a second shaft (44) laterally extending through and rotatably supported on said chassis (11) in front of said first shaft (31);
a third shaft (40) laterally extending through and rotatably supported on said chassis (11) behind said first shaft (31);
a first drive pulley (36) mounted around said first shaft (31);
said first drive pulley (36) being formed with a first one way mechanism (35) for coupling said first drive pulley (36) to said first shaft (31) when said first drive pulley (36) is rotated in said direction and for uncoupling said first drive pulley (36) from said first shaft (31) when said first drive pulley (36) is rotated in the opposite direction;
a second drive pulley (45) mounted around said second shaft (44);
a third drive pulley (42) mounted around said third shaft (40);
said third drive pulley (42) being formed with a second one-way mechanism (41) for coupling said third drive pulley (42) to said third shaft (40) when said third drive pulley (42) is rotated in said direction and for uncoupling said third drive pulley (42) from said third shaft (40) when said third drive pulley (42) is rotated in the opposite direction;
a first secondary flexible drive piece (46) running around a top edge of said first drive pulley (36) and bottom edges of said second and third drive pulleys (45, 42), said first secondary flexible drive piece (46) having two ends attached to said ends (21, 22) of said pedal (20);
a fourth drive pulley (34) securely mounted around said first shaft (31) at a side of said first drive pulley (36);
a fifth drive pulley (420) securely mounted around said third shaft (40) at a side of said third drive pulley (42); and
a second secondary flexible drive piece (43) around said fourth and fifth drive pulleys (34, 420) to transmit rotation from said third shaft (40) to said first shaft (31).

3. The scooter as claimed in claim 1, wherein said means (30) for transmitting comprise:
a first drive pulley (53) mounted around said first shaft (50);
a second drive pulley (52) mounted around said second shaft (45) at a side of said first drive pulley (53);
each of said first and second drive pulleys (52, 53) being formed with a one-way mechanisms (51) for coupling said drive pulley (52, 53) to said first shaft (50) when said drive pulley (52, 53) is rotated in said direction and for uncoupling said drive pulley (52, 53) from said first shaft (50) when said drive pulley (52, 53) is rotated in the opposite direction;
a third drive pulley (61) rotatably connected to said chassis (11) in front of said first drive pulley (53);
a first secondary flexible drive piece (62) crossly running around a rear edge of said first drive pulley (53) and a bottom edge of said third drive pulleys (61), said first secondary flexible drive piece (46) having a first end and a second end, said first end of said first secondary flexible drive piece (46) being attached to said forward end (22) of said pedal (20);
a first spring member (63) having a first ond attached to said second end of said first secondary flexible drive piece (46), and a second end attached to said chassis (11) substantially under said forward end (22) of said pedal (20);
a fourth drive pulley (64) rotatably connected to said chassis (11) behind said second drive pulley (52);
a second secondary flexible drive piece (65) running around a front edge of said second drive pulley (52) and a bottom edge of said fourth drive pulleys (64), said second secondary flexible drive piece (65) having a first end and a second end, said first end of said second secondary flexible drive piece (65) being attached to said backward end (21) of said pedal (20); and
a second spring member (66) having a first end attached to said second end of said second secondary flexible drive piece (65), and a second end attached to said backward end (21) of said pedal (20).

4. The scooter as claimed in the preceding claims, wherein said primary flexible drive piece (33) is a chain, and wherein said driving pulley (32) and driven pulley (13) are sprockets configured to mate with said chain.

5. The scooter as claimed in the preceding claims, wherein said secondary flexible drive pieces (43, 46; 62, 65) are chains, and wherein said drive pulleys (34, 36, 42, 420, 44; 52, 53, 61, 64) are sprockets configured to mate with said chains, respectively.

6. The scooter as claimed in claims 1 to 3, wherein said secondary flexible drive pieces (43, 46) are belts, and wherein said drive pulleys (34, 36, 42, 420, 44; 52, 53, 61, 64) are belt pulleys configured to mate with said belts, respectively.

7. The scooter as claimed in the preceding claims, wherein said one-way mechanism (35, 41, 51) is a racket gearing.

8. The scooter as claimed in claims 1 to 6, wherein said one-way mechanism (35, 41, 51) is an unidirectional bearing.
